(19) Europäisches Patentamt
European Patent Office
Office européen des brevets

(11) Veröffentlichungsnummer: **0 212 123 B1**

(12) # EUROPÄISCHE PATENTSCHRIFT

(45) Veröffentlichungstag der Patentschrift: **24.07.91**

(51) Int. Cl.5: **C08F 291/02**, C08L 55/02, //C08L51/04,C08L57/00, (C08F291/02,238:00)

(21) Anmeldenummer: **86108240.2**

(22) Anmeldetag: **16.06.86**

(54) **Pfropfkautschuke zur Modifizierung thermoplastischer Formmassen.**

(30) Priorität: **29.06.85 DE 3523312**

(43) Veröffentlichungstag der Anmeldung:
**04.03.87 Patentblatt 87/10**

(45) Bekanntmachung des Hinweises auf die Patenterteilung:
**24.07.91 Patentblatt 91/30**

(84) Benannte Vertragsstaaten:
**DE FR GB IT NL**

(56) Entgegenhaltungen:

**CHEMICAL ABSTRACTS, vol. 80, no. 22, 3rd June 1974, page 49, abstract no. 121969h, Columbus, Ohio, US;**

**CHEMICAL ABSTRACTS, vol. 78, no. 1, 8th January 1978, page 23, abstract no. 98306n, Columbus, Ohio, US;**

(73) Patentinhaber: **BAYER AG**

**W-5090 Leverkusen 1 Bayerwerk(DE)**

(72) Erfinder: **Eichenauer, Herbert, Dr.**
**Goethestr. 71**
**W-4047 Dormagen(DE)**
Erfinder: **Pischtschan, Afred, Dr.**
**Zur Eiche 33**
**W-5067 Kürten-Eichhof(DE)**

**EP 0 212 123 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Pfropfkautschuke, die im Gemisch mit thermoplastischen Formmassen zu Formkörpern mit hoher Zähigkeit und erhöhter Wärmestandfestigkeit führen.

Pfropfkautschuke im Sinne der vorliegenden Erfindung sind durch radikalische Polymerisation mindestens eines vinylgruppenhaltigen Monomeren in Gegenwart von mindestens einem Kautschuk hergestellte Polymerisate. Es ist bekannt, daß bei Zusatz derartiger Pfropfkautschuke, auch Pfropfprodukte genannt, zu thermoplastischen Formmassen die Zähigkeit daraus hergestellter Formkörper ansteigt. Beispielsweise läßt sich durch Zusatz von Pfropfkautschuken, die aus Polybutadienkautschuk und einem Styrol-Acrylnitril-Gemisch hergestellt werden, zu Copolymerisaten aus Styrol-Acrylnitril-Gemischen deren Zähigkeit um den Faktor 5 bis 15 steigern.

Die zähigkeitsfördernde Wirkung eines Pfropfkautschuks ist von verschiedenen Faktoren abhängig. Gemäß der US-A- 3 793 403 steigt die Zähigkeit mit der eingesetzten Menge an Pfropfkautschuk und seiner Teilchengröße, allerdings zu Lasten anderer Produkteigenschaften, beispielsweise der Oberflächenbeschaffenheit und der Wärmestandfestigkeit. Es besteht daher Bedarf an Pfropfkautschuken mit relativ kleinen Teilchen, die, in kleinen Mengen zugesetzt, die Zähigkeit ausreichend verbessern, ohne die Wärmestandfestigkeit negativ zu beeinflussen.

Das Chemical Abstracts-Referat 121969h (Band 80, Nr. 22 vom 03.06.1974, Seite 49) betrifft Golfbälle, die aus einer Mischung von Polybutadien und ABS, Ethylenglykoldimethacrylat und Dipropargylmaleat oder -itaconat durch strahleninduzierte Polymerisation hergestellt werden. Als einzige Gemeinsamkeit mit der vorliegenden Erfindund ist die Verwendung von Polybutadien anzusehen.

Das Chemical Abstracts-Referat 98306n (Band 78, Nr. 1 vom 08.01.1978, Seite 23) beschreibt das Pfropfen von Methylmethacrylat oder Butylmethacrylat in Gegenwart von Propargylacrylat auf chloriertes Polyethylen. Hier handelt es sich offensichtlich nicht um einen Kautschuk im Sinne der vorliegenden Erfindung.

Es wurde gefunden, daß Pfropfkautschuke, die durch radikalische Polymerisation von Styrol, Alkylstyrol, Acrylnitril, Methacrylnitril, Acrylsäurealkylester, Methacrylsäurealkylester oder Mischungen davon auf Polybutadien-, Styrolbutadiencopolymer- oder Acrylatkautschuk mit einer Glastemperatur unter 0 °C und in Gegenwart von 0,05 bis 5,0 Gew.-% bevorzugt 0,1 bis 3,0 Gew.-% und besonders bevorzugt 0,1 bis 2,0 Gew.-% (bezogen auf festes Pfropfprodukt) mindestens einer Verbindung der Formel I

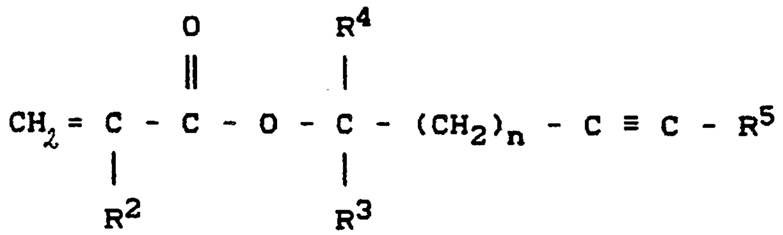
(I)

worin
$R^2$, $R^3$ = H, $C_1$-$C_8$-Alkyl
$R^4$ = H, $C_6H_5$, $C_1$-$C_8$-Alkyl
$R^5$ = H, $C_1$-$C_8$-Alkyl,

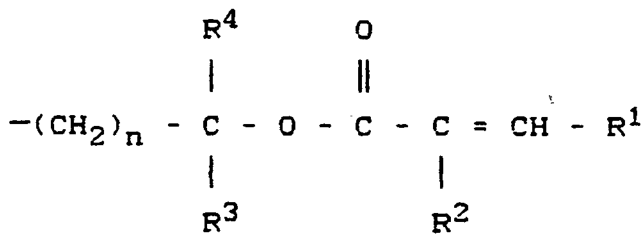

n = 0, 1, 2, 3
erhältlich sind, die geforderten Eigenschaften besitzen.

Gegenstand der Erfindung sind somit Pfropfkautschuke von einem oder mehreren vinylgruppenhaltigen

Monomeren auf mindesten einen Kautschuk, die dadurch gekennzeichnet sind, daß sie 0,05 bis 5,0 Gew.-% (bezogen auf festes Pfropfprodukt) mindestens, einer Verbindung der Formel I in zusammen mit den vinylgruppenhaltigen Monomeren polymerisierter Form enthalten.

Diese Pfropfkautschuke können grundsätzlich mit allen bekannten Techniken wie Masse-, Lösungs-, Suspensions- oder Emulsionspolymerisation hergestellt werden, wobei mehrstufige Verfahrensweisen, z.B. durch Kombination von Masse- und Suspensionspolymerisation ebenfalls möglich sind. Bevorzugt angewendet wird die Emulsionspolymerisation, bei der ein Kautschuk als Latex vorgelegt und in seiner Gegenwart die Monomeren polymerisiert werden. Mit dieser Technik wird die Bildung sehr grober Pfropfkautschukteilchen, die die Oberflächenqualität verschlechtern, weitgehend oder vollständig zurückgedrängt. Die Ergebnisse sind besonders günstig, wenn der verwendete Kautschuk mindestens teilweise vernetzt ist.

Die Pfropfprodukte bilden sich nach einem radikalischen Mechanismus, der bevorzugt mit Hilfe radikalbildender Aktivatoren initiiert wird. Als solche kommen übliche organische und anorganische Peroxide, anorganische Persulfate, Azo-Initiatoren, sowie Redox-Systeme in Betracht, wobei letztere aus einem Oxidationsmittel, vorzugsweise Peroxid(s) und einem Reduktionsmittel bestehen und zusätzlich Schwermetallionen im Reduktionsmedium zugegen sind. Die Bildung der Pfropfprodukte wird gefördert, wenn im Kautschuk C=C-Doppelbindungen enthalten sind.

Die Molgewichte der Pfropfäste können in bekannter Weise durch Zusatz von Reglern wie längerkettigen Mercaptanen, $\alpha$-Olefinen oder Terpinolen eingestellt werden. Die Polymerisationstemperaturen liegen in der Regel zwischen 25° und 160° C, vorzugsweise 40° bis 90° C.

Werden die Pfropfpolymerisate durch Masse-Polymerisation hergestellt, so wird von einer Lösung des unvernetzten Kautschuks in den Monomeren ausgegangen und nach Durchlaufen einer Phaseninversion in Masse oder Suspension auspolymerisiert. Die bei Masse- und Suspensionsverfahren einzuhaltenden Reaktionsbedingungen sind generell bekannt. Prinzipiell ist es auch möglich, teilweise vernetzte Kautschuke nach Umdispergierung in eine Monomerphase in Massepolymerisation zu pfropfen, wie z.B. in DE-OS 2 047 427 dargestellt.

Für die Pfropfpolymerisation in Lösung kommen als Lösungsmittel aromatische Kohlenwasserstoffe in Frage.

Bei der bevorzugten Emulsionspfropfung werden übliche Emulgatoren, z.B. Alkylsulfate, Aralkylsulfonate, Alkalisalze gesättigter und ungesättigter Fettsäuren, sowie Alkalisalze disproportionierter oder hydrierter Harzsäuren wie Abietin- oder Tallölsäuren verwendet. Aktiviert wird hier in der Regel mit anorganischen Peroxyverbindungen oder Redox-Systemen.

Wird bei diesen Verfahren nur bis zu nicht vollständigem Umsatz polymerisiert, so können die nicht umgesetzten Monomeren bzw. Lösemittel nach üblichen Techniken, z.B. Schneckeneindampfung, Dünnschichtverdampfung, entfernt werden.

Bei Lösungs-, Masse- und Suspensionspolymerisation fallen die Pfropfprodukte bei Entfernung flüchtiger Bestandteile als Festsubstanzen an und können sofort weiterverarbeitet werden. Emulsionspolymerisate können z.B. durch Zusatz von Salzen und/oder Säuren ausgefällt, gewaschen und getrocknet werden. Es ist aber ebenfalls möglich, Pfropfprodukte und - soweit verfügbar - thermoplastische Harz als Latices zu vermischen und gemeinsam auszufällen.

Verwendete Kautschuke müssen eine Glastemperatur unterhalb von 0° C besitzen. Geeignet sind z.B.:

- Dienkautschuke, d.h., Homopolymerisate von konjugierten Dienen mit 4 bis 8 C-Atomen wie Butadien, Isopren, Chloropren oder deren Copolymerisate mit bis zu 60 Gew.-%, bevorzugt 1 bis 30 Gew.-% eines Vinylmonomeren, z.B. Acrylnitril, Methacrylnitril, Styrol, $\alpha$-Methylstyrol, Halogenstyrole, $C_1$-$C_4$-Alkylstyrole, $C_1$-$C_6$-Alkylacrylate und -methacrylate, Alkylenglykol-di-acrylate und -methacrylate, sowie Divinylbenzol;
- Acrylatkautschuke, d.h., Homo- und Copolymerisate von $C_1$-$C_{10}$-Alkylacrylaten, z.B. Homopolymerisate von Ethylacrylat, Butylacrylat oder Copolymerisate mit bis zu 40 Gew.-%, bevorzugt nicht mehr als 10 Gew.-% Mono-Vinylmonomeren, z`B. Styrol, Acrylnitril, Vinylbutylether, Acrylsäure(ester), Methacrylsäure(ester), Vinylsulfonsäure. Bevorzugt werden solche Acrylatkautschuk-homo- bzw. Copolymerisate eingesetzt, die 0,01 bis 8 Gew.-% Divinyl- oder Polyalkylverbindungen und/oder n-Methylolacrylamid- (oder -methacrylamid)-Derivate enthalten, die als Vernetzer wirken, z.B. Divinylbenzol, Trialkylcyanurat;

Bevorzugt sind Polybutadienkautschuke, SBR-Kautschuke mitbis zu 30 Gew.-% einpolymerisiertem Styrol und Acrylatkautschuke, besonders solche, die eine Kern-Mantel-Struktur aufweisen, wie in DE-OS 3 006 804 beschrieben.

Bei der Emulsionspolymerisation werden die Kautschuke als vorgebildete Partikel eingesetzt, deren Teilchengröße durch die Herstellungsweise des Latex bestimmt ist. Zur Herstellung der erfindungsgemäßen Pfropfprodukte kommen Latices mit mittleren Teilchendurchmessern, gemessen als $d_{50}$-Wert der Teilchen-

durchmesserverteilung der Ultrazentrifugen-Messung nach Svedberg (siehe DE-OS 1 269 360), von 0,05 bis 1,5 $\mu$m, vorzugsweise 0,1 bis 0,6 $\mu$m, in Betracht, Gemische mehrerer Latices können ebenfalls verwendet werden (vergl. DE-OS 1 813 719).

Die Pfropfpolymerisate können erfindungsgemäß hergestellt werden durch Polymerisation der Pfropfmonomeren in Gegenwart des Kautschuks, auch Pfropfgrundlage genannt, sowie in Gegenwart von Verbindungen der Formel I.

Als Pfropfmonomere werden vinylgruppenhaltige Monomere mit einer polymerisierbaren Doppelbindung als Einzelverbindungen oder Gemische eingesetzt. Vorzugsweise verwendet man Verbindungen mit einer Vinylgruppe, z.B. Styrol, $C_1$-$C_4$-alkylsubstituierte Styrole, halogensubstituierte Styrole, $\alpha$-Methylstyrol, (Meth)Acrylnitril, Ester der (Meth)Acrylsäure mit $C_1$-$C_8$-aliphatischen oder cycloaliphatischen Alkoholen, Glycidyl(meth)acrylat, Hydroxyethyl(meth)acrylat, Hydroxypropyl(meth)acrylat, (Meth)Acrylsäure, Itaconsäure, Mono- und Bis-Ester von Malein- und Fumarsäure. Besonders bevorzugt sind Styrol, Methylmethacrylat und Gemische aus Styrol und Acrylnitril.

Die einzusetzenden Mengen an Pfropfmonomeren betragen 900 bis 10, vorzugsweise 250 bis 15 Gew.-Teile Monomer(gemisch) pro 100 Gew.-Teile Kautschuk (gerechnet als Festsubstanz).

Durch Variation dieses Verhältnisses, sowie gegebenenfalls durch Zusatz von Kettenüberträgern, bei Polymerisation in wäßriger Phase zusätzlich durch die Wahl der Art und Menge von Zusatzstoffen wie Suspensionsstabilisatoren, Emulgatoren läßt sich der Pfropfgrad G (= die Masse des chemisch auf der Pfropfgrundlage gebundenen Polymeren pro Masseeinheit der Pfropfgrundlage) und die Pfropfastlänge einstellen, sowie das Molgewicht des als Nebenprodukt entstehenden, nicht chemisch gebundenen Polymeren beeinflussen. Diese Größen bestimmen die Eigenschaften des Pfropfproduktes mit: mischt man solche Pfropfprodukte in vorgegebener Menge Thermoplasten zu, so steigt beispielsweise die Zähigkeit des Blends mit zunehmendem Pfropfgrad in der Regel bis zu einem Maximalwert an und fällt danach wieder ab. Die Lage des Maximums hängt von der Art und Beschaffenheit des Kautschuks ab. Geeignete Pfropfgrade sind 0,1 bis 2,0, vorzugsweise 0,2 bis 1,0. Das mittlere Molgewicht (Gewichtsmittel $\overline{M}_w$) des bei der Pfropfung als Nebenprodukt erhaltenen freien Polymeren der Pfropfmonomeren ist in der Regel 15 000 bis 250 000. Erfindungsgemäß werden bei der Pfropfpolymerisation 0,05 bis 5,0 Gew.-%, bevorzugt 0,1 bis 3,0 Gew.-% und besonders bevorzugt 0,1 bis 2,0 Gew.-% (bezogen auf festes Pfropfpolymerisat) an Verbindungen der Formel I

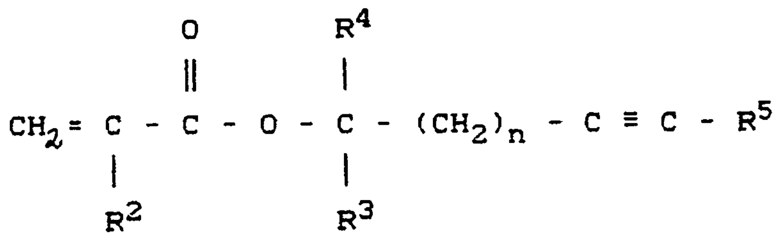 (I)

worin
$R^2$, $R^3$ = H, $C_1$-$C_8$-Alkyl
$R^4$ = H, $C_6H_5$, $C_1$-$C_8$-Alkyl
$R^5$ = H, $C_1$-$C_8$-Alkyl,

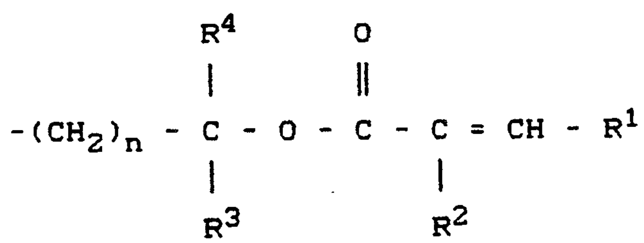

n = 0, 1, 2, 3
zugesetzt.

Beispiele geeigneter Verbindungen der Formel I sind:
Propargylacrylat, Propargylmethacrylat, Acrylsäureester bzw. Methacrylsäureester von 2-Butin-1-ol, 3-Butin-1- ol, 1-Pentin-3-ol, 3-Pentin-1-ol, 1-Hexin-3-ol, 3-Hexin- 1-ol, 1-Heptin-3-ol, 1-Octin-3-ol, 3-Nonin-1-ol, 3-Methyl-1-pentin-3-ol, 1-Phenyl-2-propin-1-ol, 2-Methyl-3-butin-1-ol, 3-Phenyl-1-butin-3-ol, Di(meth)-acrylsäureester von 2-Butin-1,4-diol.

Bevorzugte Verbindung der Formel I ist Propargylmethacrylat ($R^1$ = H, $R^2$ = $CH_3$, $R^3$ = H, $R^4$ = H, $R^5$ = H, n = O); die bestgeeigneten Einsatzmengen dafür liegen bei 0,1 bis 1,5 Gew.-Teilen pro 100 Teile festes Pfropfpolymerisat.

Die Verbindung der Formel I kann der polymerisierenden Mischung entweder allmählich entsprechend dem Verlauf der Reaktion oder insgesamt zu Beginn der Pfropfpolymerisation zugegeben werden. Zur allmählichen Zugabe kann die Verbindung der Formel I im Monomer(gemisch) gelöst werden.

Die erfindungsgemäßen Pfropfprodukte können als Modifikatoren zur Erhöhung der Zähigkeit und der Wärmestandfestigkeit einzelner oder aus verschiedenen Materialien abgemischter thermoplastischer Formmassen dienen. Beispiele für modifizierbare thermoplastische Formmassen sind:

a) Homo- und Mischpolymerisate von Styrol und alkylsubstituiertem Styrol mit vinylgruppenhaltigen Monomeren, z.B. Polystyrol, Poly(p-methyl)-styrol, Copolymeren von Styrol und Acrylnitril, Copolymeren von a-Methylstyrol und Acrylnitril, Copolymeren von Styrol und Maleinsäureanhydrid, Terpolymeren von Styrol, Acrylnitril und Maleinsäure-N-phenylimid, Copolymere von Styrol und Maleinsäure-N-phenylimid.

b) Homo- und Mischpolymerisate von $C_1$-$C_4$-Alkyl-(meth)-acrylaten mit vinylgruppenhaltigen Monomeren, z.B. Polymethylmethacrylat, Copolymere von Methylmethacrylat und Acrylnitril,

c) halogenhaltige Polymerisate, z.B. Polyvinylchlorid, Polyvinylidenchlorid, chloriertes Polyethylen,

d) Polycarbonate, z.B. auf Basis von Bisphenol A, Tetramethylbisphenol A, Tetrabrombisphenol A,

e) Polyester, z.B. auf Basis Terephthalsäure, Isophthalsäure, Ethylenglykol, Butandiol,

f) Polyamide, z.B. auf Basis von C-Caprolactam, Laurinlactam, Adipinsäure/Hexamethylendiamin.

Besonders günstige Ergebnisse erhält man in Formmassen gemäß a) und b), insbesondere in Styrol-Acrylnitril-Copolymerisaten. Verwendet man in diesem Fall Pfropfprodukte, die Styrol und Acrylnitril gepfropft enthalten, so entstehen ABS-Produkte mit hoher Zähigkeit und guter Wärmestandfestigkeit.

Für die Modifizierung von Formmassen verwendet man die erfindungsgemäßen Pfropfkautschuke in Mengen von 1 bis 80, vorzugsweise 5 bis 50 Gew.-%, bezogen auf die gesamte Formmasse. Zu ihrer Herstellung kann man übliche Mischaggregate wie Walzenstühle, Mischextruder, Innenkneter verwenden. Beim Vermischen oder an anderen Stellen der Aufarbeitung, Weiterverarbeitung und Endformung können der Formmasse erforderliche bzw. für das Einsatzgebiet zweckmäßige Additive zugesetzt werden, z.B. Antioxidantien, Antistatika, Gleitmittel, Flammschutzmittel, Füll- und Verstärkerstoffe, Farbmittel.

Die modifizierten Formmassen können auf üblichen Verarbeitungsmaschinen thermoplastisch verformt werden, z.B. durch Spritzguß, Plattenextrusion mit anschließender Warmverformung oder Extrusion (für Rohre und Profile).

In den folgenden Beispielen sind Teile immer Gewichtsteile und % immer Gew.-%, wenn nicht anders angegeben.

## Beispiele

### Beispiel 1

50 Teile (gerechnet als Feststoff) eines durch radikalische Polymerisation hergestellten anionisch emulgierten Polybutadienlatex mit einem Teilchendurchmesser ($d_{50}$) von 0,30 μm wurden mit Wasser auf einen Feststoffgehalt von ca. 20 % gebracht, auf 65° C erwärmt und mit 0,5 Teilen $K_2S_2O_8$ versetzt. Danach wurden 50 Teile eines Gemisches aus Styrol und Acrylnitril (Gewichtsverhältnis 72:28) und 0,1 Teile Propargylmethacrylat sowie 2 Teile (gerechnet als Festsubstanz) des Natriumsalzes eines Harzsäuregemisches (gelöst in alkalisch eingestelltem Wasser) während 4 Stunden zudosiert. Nach einer 4-stündigen Nachreaktionszeit bei 65° C wurde der erhaltene Pfropflatex nach Zugabe von ca. 1,0 Teil pro 100 Teile Pfropfkautschuk eines phenolischen Antioxidans mit einem Magnesiumsulfat/ Essigsäure-Gemisch koaguliert und nach dem Waschen das resultierende Pulver bei 70° C im Vakuum getrocknet.

50 Teile dieses Pfropfpolymerisats wurden mit 50 Teilen eines Styrol/Acrylnitril-Harzes (Gewichtsverhältnis 72:28, $\overline{M}_w$ ca. 115 000[(1)]; $\overline{M}_w/\overline{M}_n$ - 1 ≤ 2) [(2)], 2 Teilen Pentaerythrittetrastearat und 0,1 Teilen eines Silikonöls in einem Innenkneter vermischt und anschließend zu Normkleinstäben verspritzt.

1) $\overline{M}_w$ = mittleres Molekulargewicht (Gewichtsmittel)

2) $\overline{M}_w/\overline{M}_w$-1 = [mittleres Molekulargewicht (Gewichtsmittel)]:
[mittleres Molekulargewicht (Zahlenmittel)]-1
= molekulare Uneinheitlichkeit

Kerbschlagzähigkeit nach ASTM 256-56 ISO/R 180

| | | |
|---|---|---|
| bei 20° | : | 519 J/m |
| bei -40° C | : | 268 J/m |

Kugeldruckhärte nach DIN 53 456
72 N/mm$^2$
Vicat B-Wärmestandfestigkeit nach DIN 53 460
97° C.

Beispiel 2

Der in Beispiel 1 beschriebene Versuch wurde wiederholt, wobei jedoch bei der Pfropfpolymerisation statt 0,1 Teile 0,5 Teile Propargylmethacrylat eingesetzt werden.

Kerbschlagzähigkeit

| | | |
|---|---|---|
| bei 20° C | : | 537 J/m |
| bei -40° C | : | 261 J/m |
| Kugeldruckhärte | : | 74 N/mm$^2$ |
| Vicat B | : | 98° C |

Beispiel 3 (Vergleich)

Der in Beispiel 1 beschriebene Versuch wurde wiederholt, aber kein Propargylmethacrylat bei der Pfropfherstellung eingesetzt.

Kerbschlagzähigkeit

| | | |
|---|---|---|
| bei 20° C | : | 502 J/m |
| bei -40° C | : | 267 J/m |
| Kugeldruckhärte | : | 73 N/mm$^2$ |
| Vicat B | : | 94° C. |

**Patentansprüche**

1. Pfropfkautschuke von Styrol, Alkylstyrol, Acrylnitril, Methacrylnitril, Acrylsäurealkylester, Methacrylsäurealkylester oder Mischungen davon auf Polybutadien-, Styrolbutadiencopolymer- oder Acrylatkautschuk mit einer Glastemperatur unter 0 °C enthaltend 0,05 bis 5,0 Gew.-% (bezogen auf festes Pfropfprodukt) mindestens einer Verbindung der Formel I

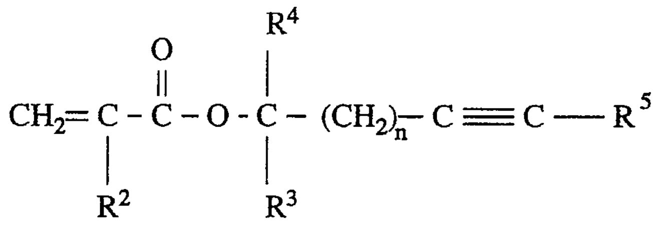

(I)

worin
$R^2$, $R^3$ = H, $C_1$-$C_8$-Alkyl
$R^4$ = H, $C_6H_5$, $C_1$-$C_8$-Alkyl
$R^5$ = H, $C_1$-$C_8$-Alkyl,

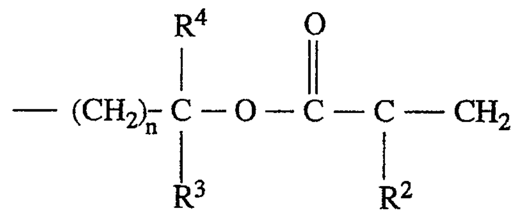

n = 0,1,2,3
in zusammen mit dem vinylgruppenhaltigen Monomeren polymerisierter Form.

2. Pfropfkautschuke gemäß Anspruch 1, dadurch gekennzeichnet, daß die Verbindung der Formel I Propargylmethacrylat ist.

3. Verwendung von Pfropfkautschuken gemäß Anspruch 1 in Mengen von 1 bis 80 Gew.-% (bezogen auf fertige Mischung) zur Herstellung kautschukmodifizierter thermoplastischer Formmassen.

4. Verwendung von Pfropfkautschuken gemäß Anspruch 2 zur Herstellung von ABS-Formmassen.

## Claims

1. Graft rubbers of styrene, alkyl styrene, acrylonitrile, methacrylonitrile, alkyl acrylates, alkyl methacrylates or mixtures thereof on polybutadiene, styrenebutadiene copolymer or acrylate rubber having a glass temperature below 0 °C containing 0.05 to 5.0% by weight (based on solid graft product) of at least one compound corresponding to formula I

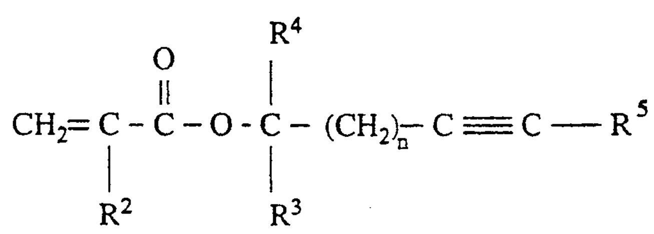

(I)

in which
$R^2$ and $R^3$ = H, $C_{1-8}$ alkyl,
$R^4$ = H, $C_6H_5$, $C_{1-8}$ alkyl,
$R^5$ = H, $C_{1-8}$ alkyl,

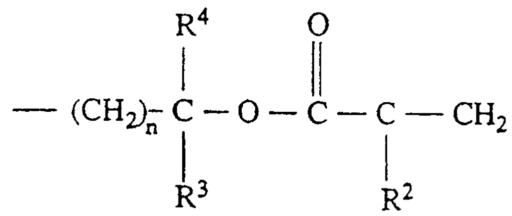

n = 0, 1, 2, 3,
polymerized together with the monomer containing vinyl groups.

2. Graft rubbers as claimed in claim 1, characterized in the compound corresponding to formula I is propargyl methacrylate.

3. The use of the graft rubbers claimed in claim 1 in quantities of 1 to 80% by weight (based on the final mixture) for the production of rubber-modified thermoplastic moulding compounds.

4. The use of the graft rubbers claimed in claim 2 for the production of ABS moulding compounds.

**Revendications**

1. Caoutchoucs greffés de styrène, d'alkylstyrène, d'acrylonitrile, de méthacrylonitrile, d'ester alkylique d'acide acrylique, d'ester alkylique d'acide méthacrylique ou de leurs mélanges sur un caoutchouc de polybutadiène, de copolymère styrène-butadiène ou d'acrylate, ayant une température de transition vitreuse inférieure à 0 °C, contenant 0,05 à 5,0 % en poids (par rapport au produit greffé solide) d'au moins un composé de formule I

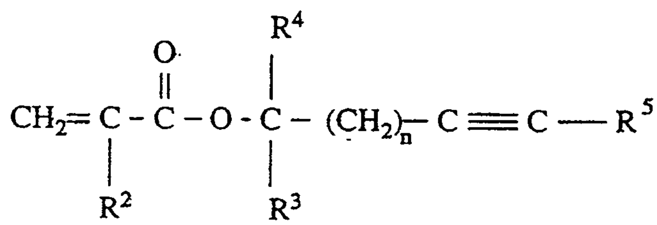 (I)

dans laquelle
$R^2$, $R^3$ = H, groupe alkyle en $C_1$ à $c_8$
$R^4$ = H, $C_6H_5$, groupe alkyle en $C_1$ à $c_8$
$R^5$ = H, groupe alkyle en $C_1$ à $C_8$,

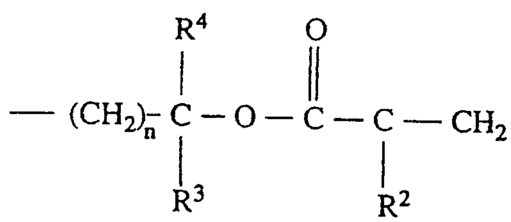

n = 0, 1, 2 ou 3
sous la forme polymérisée conjointement avec le monomère porteur de groupes vinyle.

2. Caoutchoucs greffés suivant la revendication 1, caractérisés en ce que le composé de formule I est le méthacrylate de propargyle.

**3.** Utilisation de caoutchoucs greffés suivant la revendication 1 en quantités de 1 à 80 % en poids (par rapport au mélange prêt à l'emploi) pour la production de masses à mouler thermoplastiques modifiées par un caoutchouc.

**4.** Utilisation de caoutchoucs greffés suivant la revendication 2 pour la production de masses à mouler d'ABS.